# EUROPEAN PATENT APPLICATION

(11) **EP 1 684 235 A1**
(43) Date of publication of application: **26.07.2006**
(21) Application number: 05253468.2
(22) Date of filing: 06.06.2005
(51) Int. Cl.: G06T 15/00

(54) **Image drawing device and image drawing method**

(30) Priority: 24.01.2005 JP 2005015666
(71) Applicant: FUJITSU LIMITED, Kawasaki-shi, Kanagawa 211-8588 (JP)
(72) Inventor: Nishi, Hidefumi, Fujitsu Limited, Kawasaki-shi Kanagawa 211-8588 (JP)
(74) Representative: Hitching, Peter Matthew

(57) **Abstract**

A figure dividing unit (2) sequentially generates, on the basis of sequentially input figure data, plural processing unit data respectively representing portions corresponding to plural partial areas constituting an image drawing area of a figure represented by the figure data. Drawing processing units (6) each correspond to at least one of the plural partial areas, and perform, using the processing unit data, drawing processing on the corresponding partial areas independently of one another. A processing assignment unit (4) sequentially determines which one of the drawing processing units (6) should process the processing unit data, on the basis of drawing position information contained in the processing unit data that are sequentially generated by the figure dividing unit (2).

## Description

### BACKGROUND OF THE INVENTION

### 1. Field of the Invention

The present invention relates to an image drawing device and an image drawing method and, more particularly, to a technique for increasing the image drawing speed.

### 2. Description of the Related Art

Image drawing devices of 3-D graphics etc. draw a drawing subject image by regarding it as a collection of plural figures (e.g., triangles) and performing drawing processing on each figure. To improve the drawing performance, such image drawing devices generally employ a pipeline processing architecture in which plural pieces of processing (stages) that can be performed independently of one another are performed simultaneously. It is also possible to increase the speed of image drawing by causing plural image drawing devices to operate parallel.

One technique for increasing the processing speed of an image processing system (image processing device) is disclosed in Japanese Unexamined Patent Application Publication No. Hei 7-334671, for example. This technique shortens the total processing time of a single image data input/output operation in an image processing system by sequentially performing plural pieces of filtering processing and thereby decreasing an access time to a memory for storing data that are necessary for the filtering processing. Japanese Unexamined Patent Application Publication No. 2004-145838 discloses an image processing device that utilizes a large number of operators efficiently and thereby performs operation processing at high speed without increasing the circuit scale or cost.

The present invention has been made to solve the following problems. In image drawing devices employing the pipeline processing architecture, stages are executed sequentially while processing results are exchanged between the stages at each pipeline step. Therefore, for example, when drawing processing for figure B having an overlap with figure A is started before drawing processing for figure A is completed, in performing drawing processing for part of figure B that is the overlap with figure A processing (e.g., semitransparent composite processing or depth comparison processing) that requires a processing result of the drawing processing for figure A may be performed by using an erroneous processing result. To avoid this phenomenon, it is necessary to suspend the drawing processing for figure B until completion of the drawing processing for figure A. As a result, the image drawing speed decreases as the number of figures that overlap with each other increases. This kind of problem also occurs in causing plural image drawing devices to operate parallel. While a certain drawing device is performing drawing processing for figure A, other drawing devices are allowed to perform only drawing processing for figures that do not overlap with figure A. That is, drawing processing for figure A and drawing processing for figure B cannot be performed in parallel.

### SUMMARY OF THE INVENTION

An object of the present invention is to provide an image drawing device and an image drawing method capable of increasing the image drawing speed.

According to one aspect of the invention, a figure dividing unit sequentially generates, on the basis of sequentially input figure data, plural pieces of processing unit data representing portions, corresponding to a plurality of partial areas constituting an image drawing area, of a figure represented by the figure data. Drawing processing units each correspond to at least one of the plurality of partial areas, and perform, using the processing unit data, respective pieces of drawing processing on the corresponding partial areas independently of one another. A processing assignment unit sequentially determines which one of the drawing processing units should process the processing unit data, on the basis of drawing position information contained in the processing unit data that are sequentially generated by the figure dividing unit.

With the above configuration, the drawing processing units that are sequentially determined by the processing assignment unit perform, in parallel, pieces of drawing processing on respective partial areas of a figure represented by figure data. For example, when figure data representing respective figures A and B that overlap with each other are input sequentially, a drawing processing unit that is different from a drawing processing unit that performs drawing processing for figure A can perform drawing processing for a portion of figure B that does not overlap with figure A. Therefore, the drawing processing for figure A and the drawing processing for the portion of figure B that does not overlap with figure A can be performed parallel. In other words, it is not necessary to refrain from performing the drawing processing for figure B until completion of the drawing processing for figure A. This makes it possible to increase the image drawing speed. And the invention becomes more advantageous as the number of figures that overlap with each other increases.

In a preferable embodiment of the above one aspect of the invention, a processing unit data holding circuit of each of the drawing processing units temporarily holds at least one ensuing piece of processing unit data during drawing processing using processing unit data. With this measure, when drawing processing using input data that were input previously is being performed when new processing unit data are input from the processing assignment unit, the new input data are held temporarily until completion of the current drawing processing. This preferable embodiment prevents an event that while a drawing processing unit determined by the processing assignment unit performs drawing processing the processing assignment unit cannot send processing unit data to that drawing processing unit. Overlap between more figures can be permitted as the number of pieces of data that can be held by the processing unit data holding circuit increases.

In a preferable embodiment of the above one aspect of the invention, each of the drawing processing units is a processor that executes instructions according to a user program. With this measure, the details of drawing processing performed by each drawing processing unit can be modified merely by altering a user program. This preferable embodiment makes it possible to accommodate various drawing modes without changing the circuit configurations of the drawing processing units.

In a preferable embodiment of the above one aspect of the invention, an operator performs operation processing corresponding to a prescribed one of a plurality of drawing modes. For example, the operator performs semitransparent composite processing or depth comparison processing as the operation processing. Each of the drawing processing units instructs the operator to perform operation processing in accordance with a drawing mode when recognizing an instruction to activate the operator.

In a preferable embodiment of the above one aspect of the invention, the processing assignment unit causes parallel operation of a plurality of drawing processing units that processes processing unit data corresponding to non-overlapped partial areas of a plurality of figures.

In a preferable embodiment of the above one aspect of the invention, the processing assignment unit prohibits parallel operation of a plurality of drawing processing units that processes processing unit data corresponding to overlapped partial areas of a plurality of figures.

In a preferable embodiment of the above one aspect of the invention, a position information holding circuit of each of the drawing processing units holds, each time drawing processing is performed, drawing position information contained in processing unit data used in the drawing processing. A storing circuit of each of the drawing processing units stores, each time drawing processing is performed, processed data obtained by the drawing processing. A processing circuit of each of the drawing processing units performs drawing processing using processed data obtained by preceding drawing processing and stored in the storing circuit when drawing position information contained in processing unit data used in current drawing processing coincides with the drawing position information held by the position information holding circuit, and stores, in an external storing circuit, the processed data obtained by the preceding drawing processing and stored in the storing circuit and then acquires desired processed data from the external storing circuit to perform drawing processing using the acquired processed data when the drawing position information contained in the processing unit data used in the current drawing processing does not coincide with the drawing position information held by the position information holding circuit, when processed data obtained by previous drawing processing is necessary for performing the current drawing processing. When drawing position information contained in processing unit data used in current drawing processing coincides with the drawing position information held by the holding circuit, the drawing processing unit does not access the external storing circuit. This preferable embodiment makes it possible to further increase the image drawing speed.

In a preferable embodiment of the above one aspect of the invention, the same drawing processing unit corresponds to partial areas of the same column of the image drawing area. With this measure, a drawing processing unit as a destination of processing unit data can easily be determined from drawing position information. Therefore, a circuit of the processing assignment unit for determining a drawing processing unit can be constructed as a simple circuit.

In a preferable embodiment of the above one aspect of the invention, different drawing processing units correspond to two partial areas adjacent to each other of the image drawing area. With this measure, the number of drawing processing units that are involved in drawing processing for a single figure can be increased. This makes it possible to increase the degree of parallelism of drawing processing.

In a preferable embodiment of the above one aspect of the invention, the plurality of drawing processing units arranged in prescribed order correspond to partial areas of one of two columns adjacent to each other of the image drawing area, and the plurality of drawing processing units arranged in opposite order to the prescribed order correspond to partial areas of the other column.

### BRIEF DESCRIPTION OF THE DRAWINGS

The nature, principle, and utility of the invention will become more apparent from the following detailed description when read in conjunction with the accompanying drawings in which like parts are designated by identical reference numbers, in which:
Fig. 1 is a block diagram showing the principle of the present invention;
Fig. 2 is a block diagram showing a first embodiment of the invention;
Fig. 3 is a block diagram showing the details of a raster engine according to the first embodiment;
Fig. 4 is a flowchart showing data processing by a raster core RC according to the first embodiment;
Fig. 5 is an explanatory diagram showing how a raster dispatcher according to the first embodiment determines a data destination;
Fig. 6 is an explanatory diagram outlining graphics drawing in the first embodiment;
Fig. 7 is a block diagram showing a comparative example for comparison with the invention;
Fig. 8 is an explanatory diagram showing a second embodiment of the invention;
Fig. 9 is an explanatory diagram outlining graphics drawing in the second embodiment;
Fig. 10 is another explanatory diagram outlining graphics drawing in the second embodiment; and
Fig. 11 is a block diagram showing a third embodiment of the invention.

### DESCRIPTION OF THE PREFERRED EMBODIMENTS

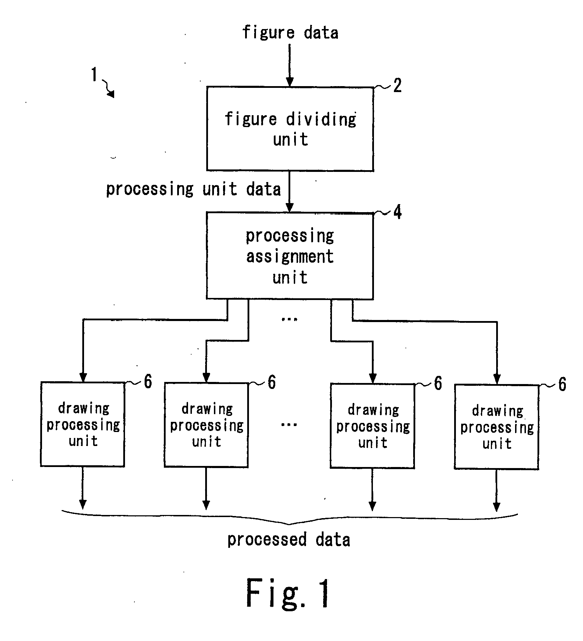

Embodiments of the present invention will be hereinafter described with reference to the drawings. Fig. 1 shows the basic principle of the invention. An image drawing device 1 is equipped with a figure dividing unit 2, a processing assignment unit 4, and plural drawing processing units 6. The figure dividing unit 2 sequentially generates, on the basis of sequentially input figure data, plural pieces of processing unit data representing portions, corresponding to plural partial areas constituting an image drawing area, of a figure represented by the figure data. The drawing processing units 6 each correspond to at least one of the plural partial areas, and perform, using the processing unit data, respective pieces of drawing processing on the corresponding partial areas independently of one another. The processing assignment unit 4 sequentially determines which one of the drawing processing units 6 should process the processing unit data, on the basis of drawing position information contained in the processing unit data that are sequentially generated by the figure dividing unit.

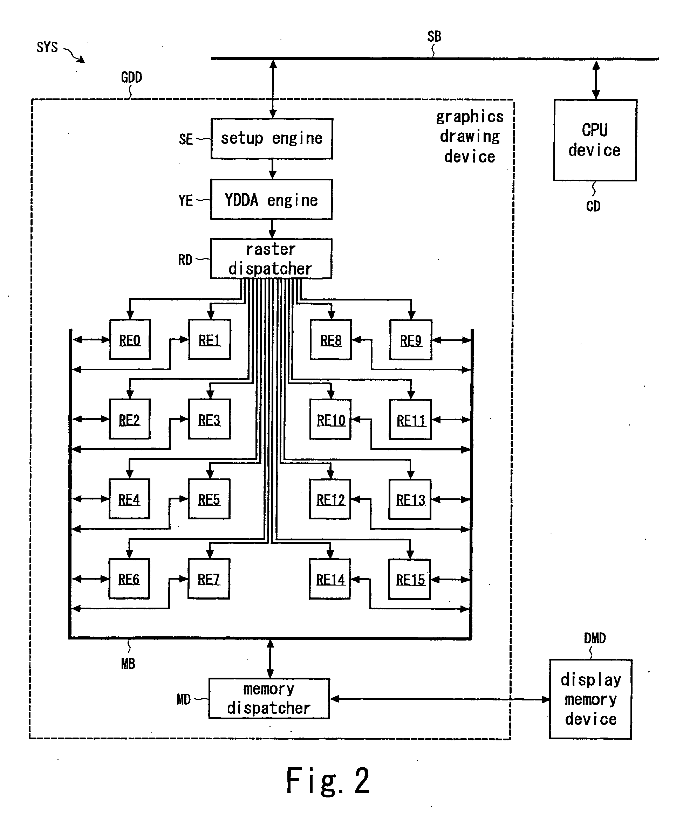

Fig. 2 shows a first embodiment of the invention. A graphics drawing device (image drawing device) GDD is incorporated in, for example, a car navigation system SYS having a graphics display function together with a CPU device CD, a display memory device DMD, etc., and is equipped with a setup engine SE, a YDDA engine YE, a raster dispatcher RD (processing assignment unit), raster engines RE0-RE15 (drawing processing units), and a memory dispatcher MD.

The graphics drawing device GDD performs drawing processing on a graphics drawing area (image drawing area) that consists of 4,096 (in an X direction) x 4,096 (in a Y direction) pixels, for example. Therefore, the coordinates of each pixel are represented by 24 bits (X coordinate: 12 bits, Y coordinates: 12 bits). The graphics drawing area consists of 256 x 4,096 partial areas each of which consists of 16 x 1 pixels.

The setup engine SE calculates, for each raster (a set of pixels obtained by dividing a drawing subject triangle into rows (each row has one pixel in the Y direction)), coordinates of a head pixel of the raster, the number of pixels of the raster (i.e., raster length), and parameter value increments in the X and Y directions on the basis of figure data (includes the coordinates of pixels at the apices of each triangle and parameter values such as color codes and Z values (depth information)) that are sequentially input from the CPU device CD via a system bus SB, and outputs resulting data to the YDDA engine YE sequentially.

The YDDA engine YE calculates parameter values of the head pixel of each raster on the basis of the data that are sequentially input from the setup engine SE. The YDDA engine YE outputs the calculated parameter values of the head pixel of the raster to the raster dispatcher RD together with the coordinates of the head pixel and the number of pixels of the raster and parameter value increments in the X direction (data of these kinds are output sequentially).

The raster dispatcher RD calculates, for each partial area, coordinates of a head pixel in the partial area, parameter values of the head pixel, and the number of pixels on the basis of the data that are sequentially output from the YDDA engine YE. The raster dispatcher RD outputs the calculated coordinates of the head pixel in the partial area, parameter values of the head pixel, and number of pixels to one of the raster engines RE0-RE15 in accordance with the calculated coordinates (drawing position information) of the head pixel in the partial area together with parameter value increments in the X direction. In this manner, the setup engine SE, the YDDA engine YE, and the raster dispatcher RD function as a figure dividing unit that sequentially generates, on the basis of figure data that are input sequentially, plural processing unit data representing respective portions, corresponding to plural partial areas that constitute the image drawing area, of the figure represented by the figure data.

The raster engines REn (RE0-RE15) calculate parameter values of the pixels in the partial areas in order of the pixels arranged in the X direction on the basis of the data that are sequentially input from the raster dispatcher RD, and performs drawing processing (pixel data generation). Connected to the memory dispatcher MD via a memory bus MB, the raster engines REn can exchange data with the memory dispatcher MD. The memory dispatcher MD accepts, with arbitration, an access request from the raster engines RE0-RE15 and accesses the display memory device DMD corresponding to the accepted access request. The display memory device DMD is a memory device for storing image data to be displayed on a display device (not shown) of the car navigation system SYS.

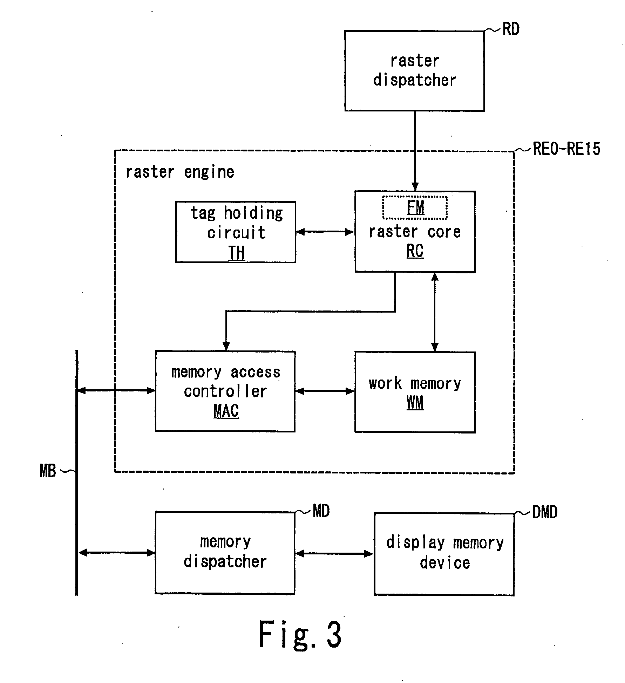

Fig. 3 shows the details of each of the raster engines REn (RE0-RE15) according to the first embodiment. Each raster engine REn, which is, for example, a processor that executes instructions according to a user program, is equipped with a raster core RC (processing circuit), a work memory WM (storing circuit), a tag holding circuit TH (position information holding circuit), and a memory access controller MAC (processing circuit).

Having a FIFO memory FM (processed data holding circuit) for storing data supplied from the raster dispatcher RD, the raster core RC reads out data in order of their storage into the FIFO memory FM and performs drawing processing. The work memory WM stores processed data each time the raster core RC performs drawing processing. The tag holding circuit TH is a circuit for holding, as tag data, coordinate data (actually, part of the coordinate data) of a head pixel in the partial area that are included in data supplied from the raster dispatcher RD. Data are written to the tag holding circuit TH by the raster core RC each time the raster core RC performs drawing processing.

When instructed by the raster core RC to transfer data from the work memory WM to the display memory device DMD, the memory access controller MAC outputs a write access request to the memory dispatcher MD. When receiving an access permission notice from the memory dispatcher MD, the memory access controller MAC stores, in the display memory device DMD, via the memory bus MB and the memory dispatcher MD, processed data stored in the work memory WM. When instructed by the raster core RC to transfer data from the display memory device DMD to the work memory WM, the memory access controller MAC outputs a read access request to the memory dispatcher MD. When receiving an access permission notice from the memory dispatcher MD, the memory access controller MAC stores, in the work memory WM, via the memory bus MB and the memory dispatcher MD, desired processed data stored in the display memory device DMD. When recognizing an instruction to activate the memory access controller MAC, the raster core RC instructs the memory access controller MAC to access the display memory device DMD in accordance with a drawing mode. For example, the raster core RC instructs the memory access controller MAC to access the display memory device DMD only when the drawing mode that has been set by a user is a drawing mode in which to perform depth comparison processing (Z value comparison processing). Therefore, the same program can be used for plural drawing modes merely by changing the user setting of the drawing mode.

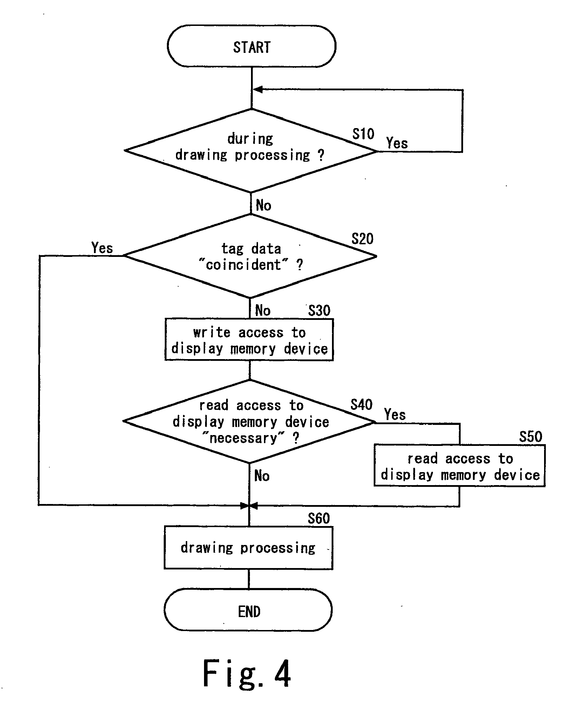

Fig. 4 shows data processing by the raster core RC according to the first embodiment.

At step S10, when receiving data from the raster dispatcher RD, the raster core RC stores the data in the FIFO memory FM. When drawing processing using previous data is being performed, the raster core RC refrains from reading data to be used for the next drawing processing from the FIFO memory FM. The process moves to step S20 upon completion of the drawing processing using the previous data.

At step S20, the raster core RC reads earliest-stored data from the FIFO memory FM and judges whether the head pixel coordinate data included in the read-out data coincide with the tag data held by the tag holding circuit TH (i.e., the head pixel coordinate data included in the data that were used in the preceding drawing processing). When it is judged that the two kinds of data coincide with each other, the process moves to step S60. When it is judged that the two kinds of data do not coincide with each other, the process moves to step S30.

At step S30, the raster core RC instructs the memory access controller MAC to make a write access to the display memory device DMD (i.e., a data transfer from the work memory WM to the display memory device DMD). As a result, processed data obtained by the preceding drawing processing and stored in the work memory WM are stored in the display memory device DMD. Then, the process moves to step S40.

At step S40, the raster core RC judges, on the basis of the drawing mode, whether a read access to the display memory device DMD (i.e., a data transfer from the display memory device DMD to the work memory WM) is necessary. For example, when the current drawing mode is a drawing mode in which to perform depth comparison processing and it is judged that a read access to the display memory device DMD is necessary, the process moves to step S50. When it is judged that a read access to the display memory device DMD is not necessary, the process moves to step S60.

At step S50, the raster core RC instructs the memory access controller MAC to make a read access to the display memory device DMD. As a result, desired processed data stored in the display memory device DMD are stored in the work memory WM. Then, the process moves to step S60.

At step S60, the raster core RC performs drawing processing using the data read from the FIFO memory FM and the data read from the work memory WM and stores processed data obtained by the drawing processing in the work memory WM.

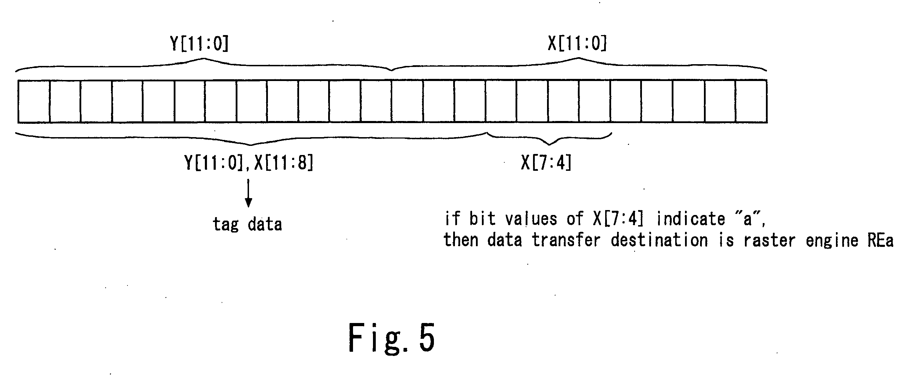

Fig. 5 shows how the raster dispatcher RD according to the first embodiment determines a data destination. The raster dispatcher RD determines a data destination on the basis of bit values of bits X[7:4] of coordinate data Y[11:0] and X[11:0] of a head pixel in a partial area. More specifically, when a decimal number indicated by the bit values of the bits X[7:4] is "a," data are sent to the raster engine REa. Therefore, the same raster engine is in charge of drawing processing for partial areas of the same column of the graphics drawing area. Tag data to be held by the tag holding circuit TH of each raster engine REn are bit values of bits Y[11:0] and X[11:8].

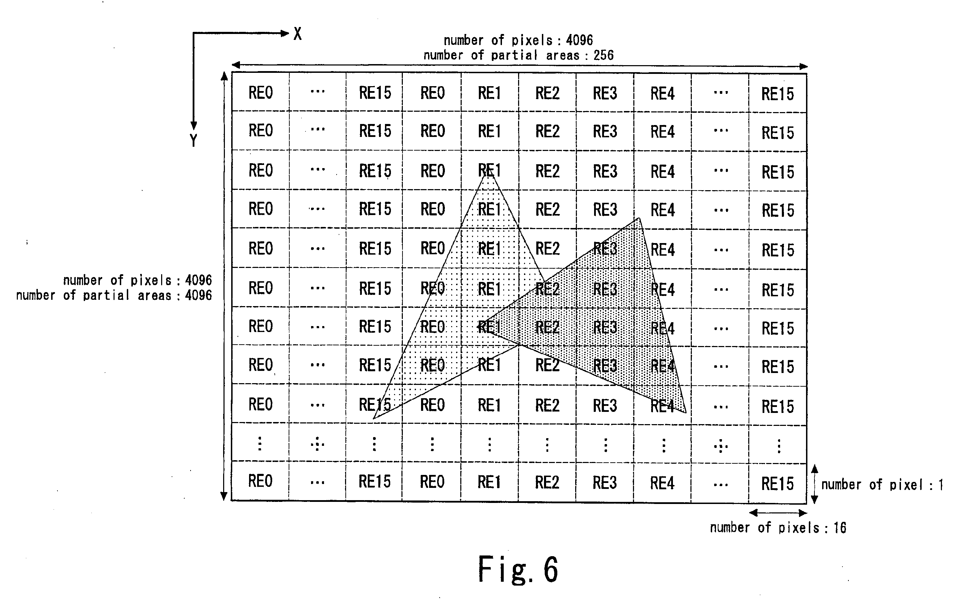

Fig. 6 outlines graphics drawing in the first embodiment. In the graphics drawing device GDD having the above-described configuration, while the raster engines RE15 and RE0-RE2 are performing drawing processing for triangle A (on the left side in Fig. 6) in parallel, the raster engines RE3 and RE4 perform drawing processing for a portion of triangle B (on the right side in Fig. 6) that does not overlap with triangle A. This improves the graphics drawing performance.

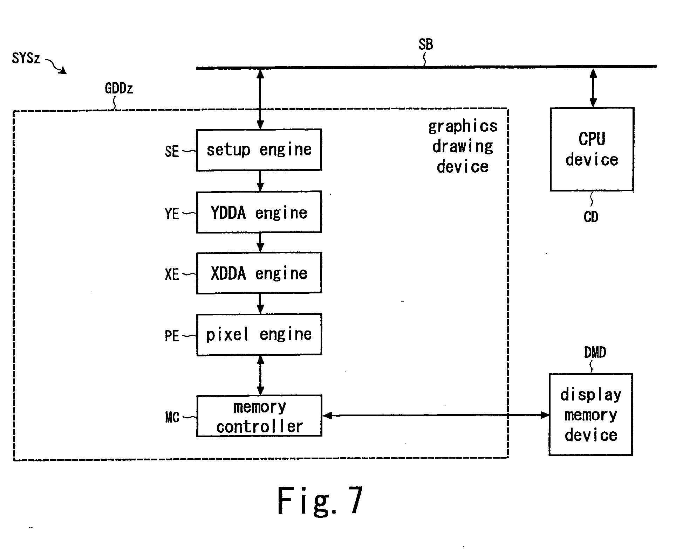

Fig. 7 shows a comparative example for comparison with the invention. In the following description of the comparative example, components having the same components in the first embodiment will be given the same reference symbols as the latter and will not be described in detail. A graphics drawing device GDDz is incorporated in a car navigation system SYSz together with a CPU device CD, a display memory device DMD, etc., and is equipped with a setup engine SE, a YDDA engine YE, an XDDA engine XE, a pixel engine PE, and a memory controller MC. The graphics drawing device GDDz employs a pipeline drawing architecture.

The XDDA engine XE calculates coordinates and parameter values of individual pixels in order of the pixels arranged in the X direction on the basis of data that are sequentially input from the YDDA engine YE, and outputs resulting data sequentially to the pixel engine PE. The pixel engine PE performs drawing processing using the data that are sequentially input from the XDDA engine XE. When receiving an access request from the pixel engine PE, the memory controller MC makes an access corresponding to the access request to the display memory device DMD.

In the graphics drawing device GDDz having the above configuration, for example, when drawing processing for triangle B is started before completion of drawing processing for triangle A of the first embodiment, drawing processing for the portion of triangle B that is the overlap with triangle A is performed by using an erroneous processing result. Therefore, it is necessary to refrain from performing drawing processing for triangle B until completion of drawing processing for triangle A. As a result, the graphics drawing speed decreases as the number of figures that overlap with each other increases.

As described above, the first embodiment makes it possible to perform, in parallel, pieces of drawing processing for portions of individual figures that do not overlap with each other, and hence greatly contributes to improvement of the graphics drawing performance. When coordinate data included in data that are used for current drawing processing coincide with tag data held by the tag holding circuit HC, the raster engine REn does not cause any access to the display memory device DMD. This enables further increase in graphics drawing speed.

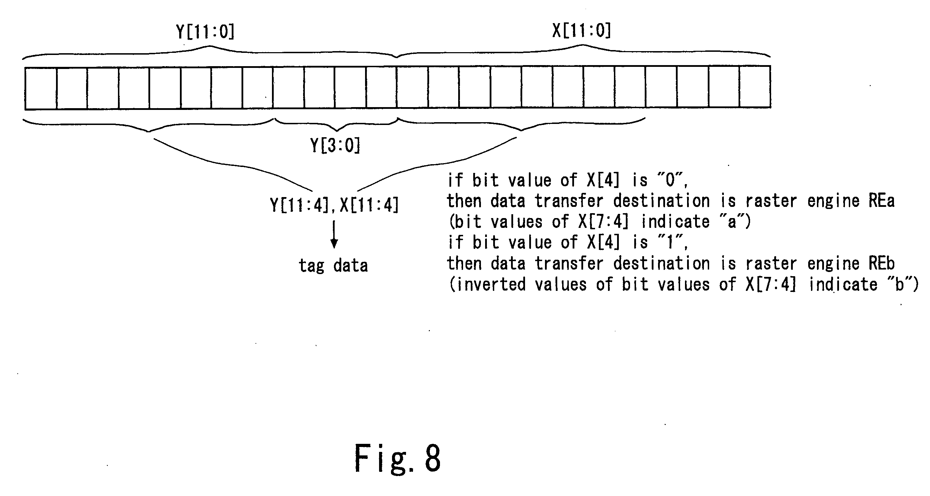

Fig. 8 shows a second embodiment of the invention. In the following description of the second embodiment, components having the same components in the first embodiment will be given the same reference symbols as the latter and will not be described in detail. A graphics drawing device according to the second embodiment is the same as the graphics drawing device according to the first embodiment except a raster dispatcher. The raster dispatcher according to the second embodiment determines a data destination on the basis of bit values of bits Y[3:0] and X[4] of coordinate data Y[11:0] and X[11:0] of a head pixel in a partial area. More specifically, when the bit value of the bit X[4] is "0" and a decimal number indicated by the bit values of the bits Y[3:0] is "a," data are sent to the raster engine REa. When the bit value of the bit X[4] is "1" and a decimal number indicated by the inverted values of the bit values of the bits Y[3:0] is "b," data are sent to the raster engine REb. Therefore, for partial areas of two adjoining columns of the graphics drawing area, raster engines REn take charge of drawing processing on the partial areas of one column in ascending order and raster engines REn take charge of drawing processing on the partial areas of the other column in descending order. Tag data to be held by the tag holding circuit TH of each raster engine REn are bit values of bits Y[11:4] and X[11:4].

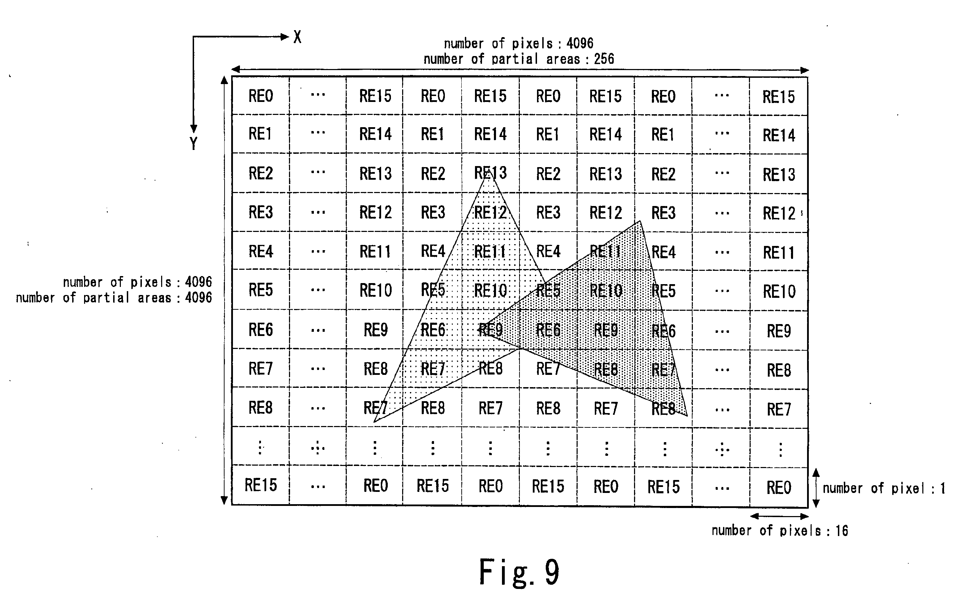

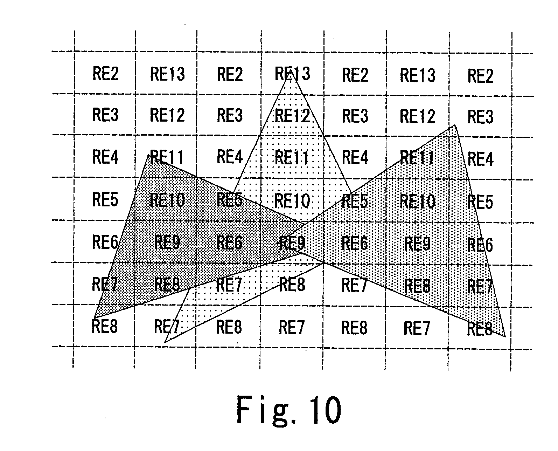

Figs. 9 and 10 outlines graphics drawing in the second embodiment. In general, drawing processing is performed in order that corresponds to a direction from a top-left position to a bottom-left position in the drawings. Therefore, in the above-configured graphics drawing device according to the second embodiment, contention is less prone to occur between pieces of drawing processing by raster engines REn. As shown in Fig. 9, when drawing processing for triangle A is performed, more raster engines perform drawing processing in parallel than in the first embodiment. As shown in Fig. 10, also in the case where three triangles overlap with each other, portions of the three triangles that do not overlap with each other are subjected to drawing processing in parallel. As such, the second embodiment provides the same advantages as the first embodiment. Further, the probability of occurrence of contention between pieces of drawing processing by raster engines REn can be decreased and hence more raster engines can be caused to operate parallel than in the first embodiment. Therefore, the drawing speed can further be increased.

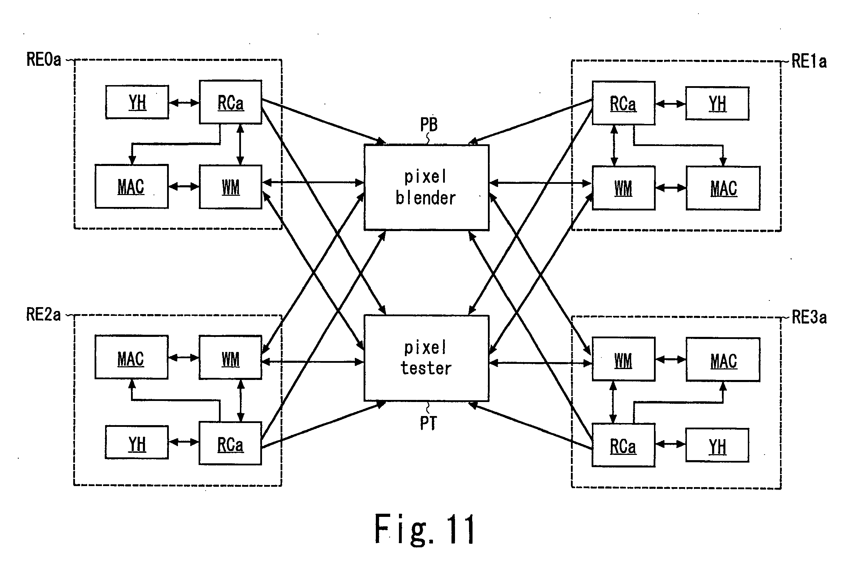

Fig. 11 shows a third embodiment of the invention. In the following description of the third embodiment, components having the same components in the first embodiment will be given the same reference symbols as the latter and will not be described in detail. A graphics drawing device according to the third embodiment is different from the graphics drawing device GDD according to the first embodiment in that four pixel blenders PB and four pixel testers PT are added and raster engines RE0a-RE15a are provided in place of the raster engines RE0-RE15. The other part of the configuration of the graphics drawing device according to the third embodiment is the same as the corresponding part of the graphics drawing device GDD according to the first embodiment.

The raster engines REna (RE0a-RE15a) are the same as the raster engines REn of the first embodiment except that the former are provided with a raster core RCa in place of the raster core RC of the first embodiment. The raster core RCa is the same as the raster core RC of the first embodiment except that the former can execute an instruction for activating a pixel blender PB and an instruction for activating a pixel tester PT. When finding that the drawing mode is one with alpha blending (semitransparent combining) in executing a pixel blender activation instruction, the raster core RCa instructs the pixel blender PB to perform alpha blending processing. When finding that the drawing mode is one without alpha blending, the raster core RCa does not instruct the pixel blender PB to perform alpha blending processing. When finding that the drawing mode is one with depth comparison in executing a pixel tester activation instruction, the raster core RCa instructs the pixel tester PT to perform depth comparison processing. When finding that the drawing mode is one without depth comparison, the raster core RCa does not instruct the pixel tester PT to perform depth comparison processing.

Provided so as to correspond to four raster engines REna, each pixel blender PB reads pixel data from the work memory WM in response to an instruction from the raster core RCa of a corresponding raster engine REna, performs alpha blending processing using a prescribed alpha value (semitransparency factor), for example, and writes pixel data as a processing result back to the work memory WM. Provided so as to correspond to four raster engines REna, each pixel tester PT reads pixel data from the work memory WM in response to an instruction from the raster core RCa of a corresponding raster engine REna, performs depth comparison processing using a Z value contained in the pixel data, and writes pixel data as a processing result back to the work memory WM. Performing alpha blending processing and depth comparison processing, which are frequently used in drawing processing, by means of the dedicated hardware in this manner makes it possible to perform drawing processing at higher speed.

As described above, the third embodiment provides the same advantages as the first embodiment. Further, high-speed drawing processing can be realized by causing the hardware that is separate from the raster engines REna to perform operation processing that is frequently used in drawing processing. Still further, since each raster engine REna judges, on the basis of the drawing mode, whether to activate the operator, the same program can be used for different drawing modes.

Although the first to third embodiments are directed to the cases where the invention is applied to drawing processing for triangles, the invention is not limited to those embodiments. For example, the invention can be applied to drawing processing for other figures such as lines or rectangles.

The third embodiment is such that one pixel blender PB and one pixel tester PT are provided so as to be shared by each set of four raster engines, the invention is not limited to this embodiment. For example, to improve the drawing performance further, the pixel blenders PB and the pixel testers PT may be provided in one-to-one correspondence to the raster cores or one pixel blender PB and one pixel tester PT may be provided so as to be shared by each set of two raster engines. To reduce the circuit scale, one pixel blender PB and one pixel tester PT may be shared by the 16 raster engines.

Although the first to third embodiments are such that the raster engines REn are processors, the invention is not limited to those embodiments. For example, where drawing processing need not be altered, the raster engines REn may be circuits capable of performing only prescribed drawing processing.

## Claims

1. An image drawing device comprising:
a figure dividing unit that sequentially generates, on the basis of sequentially input figure data, plural pieces of processing unit data respectively representing portions corresponding to a plurality of partial areas constituting an image drawing area of a figure represented by said figure data;
a plurality of drawing processing units each of which corresponds to at least one of said plurality of partial areas and performs, using the processing unit data, drawing processing on the corresponding partial area(s) independently of one another; and
a processing assignment unit that sequentially determines which one of said drawing processing units should process the processing unit data, on the basis of drawing position information contained in the processing unit data that are sequentially generated by said figure dividing unit.

2. The image drawing device according to claim 1, wherein each of said drawing processing units comprises a processing unit data holding circuit temporarily holds at least one ensuing piece of processing unit data during the drawing processing using the processing unit data.

3. The image drawing device according to claim 1, wherein each of said drawing processing units is a processor that executes instructions according to a user program.

4. The image drawing device according to claim 3, further comprising an operator that performs operation processing corresponding to a prescribed one of a plurality of drawing modes, and wherein each of said drawing processing units instructs said operator to perform the operation processing in accordance with the drawing mode when recognizing an instruction to activate said operator.

5. The image drawing device according to claim 4, wherein said operator performs semitransparent composite processing as the operation processing.

6. The image drawing device according to claim 4, wherein said operator performs depth comparison processing as the operation processing.

7. The image drawing device according to claim 1, wherein said processing assignment unit causes parallel operation of a plurality of drawing processing units that processes processing unit data corresponding to non-overlapped partial areas of a plurality of figures.

8. The image drawing device according to claim 1, wherein said processing assignment unit prohibits parallel operation of a plurality of drawing processing units that processes processing unit data corresponding to overlapped partial areas of a plurality of figures.

9. The image drawing device according to claim 1, wherein each of said drawing processing units comprises:
a position information holding circuit that holds, each time the drawing processing is performed, the drawing position information contained in the processing unit data used in the drawing processing;
a storing circuit that stores, each time the drawing processing is performed, processed data obtained by the drawing processing; and
a processing circuit that performs the drawing processing using the processed data obtained by preceding drawing processing and stored in said storing circuit when the drawing position information contained in the processing unit data used in current drawing processing coincides with the drawing position information held by said position information holding circuit, and
that stores, in an external storing circuit, the processed data obtained by the preceding drawing processing and stored in said storing circuit, and then acquires desired processed data from said external storing circuit to perform the drawing processing using the acquired processed data when the drawing position information contained in the processing unit data used in the current drawing processing does not coincide with the drawing position information held by said position information holding circuit,
when processed data obtained by previous drawing processing is necessary for performing the current drawing processing.

10. The image drawing device according to claim 1, wherein the same drawing processing unit corresponds to partial areas of the same column of said image drawing area.

11. The image drawing device according to claim 1, wherein different drawing processing units correspond to two partial areas adjacent to each other of said image drawing area.

12. The image drawing device according to claim 11, wherein said plurality of drawing processing units arranged in prescribed order correspond to partial areas of one of two columns adjacent to each other of said image drawing area, and said plurality of drawing processing units arranged in opposite order to said prescribed order correspond to partial areas of the other column.

13. An image drawing method, comprising the steps of:
sequentially generating, on the basis of sequentially input figure data, plural pieces of processing unit data respectively representing portions corresponding to a plurality of partial areas constituting an image drawing area of a figure represented by said figure data;
sequentially determining which one of a plurality of drawing processing units should process the processing unit data on the basis of drawing position information contained in the processing unit data that are sequentially generated, each of said plurality of drawing processing units corresponding to at least one of said plurality of partial areas; and
performing, by each of the sequentially determined drawing processing units, drawing processing on the corresponding partial area(s) independently of one another using the processing unit data.

14. The image drawing method according to claim 13, wherein each of said drawing processing units temporarily holds at least one ensuing piece of processing unit data during the drawing processing using the processing unit data.

15. The image drawing method according to claim 13, wherein each of said drawing processing units executes instructions according to a user program.

16. The image drawing method according to claim 15, wherein when recognizing an instruction to activate an operator that performs operation processing corresponding to a prescribed one of a plurality of drawing modes, each of said drawing processing units instructs said operator to perform the operation processing in accordance with the drawing mode.

17. The image drawing method according to claim 16, wherein said operator performs semitransparent composite processing as the operation processing.

18. The image drawing method according to claim 16, wherein said operator performs depth comparison processing as the operation processing.

19. The image drawing method according to claim 13, wherein each of said drawing processing units comprising the steps of:
holding, each time the drawing processing is performed, the drawing position information contained in the processing unit data used in the drawing processing;
storing, each time the drawing processing is performed, processed data obtained by the drawing processing; and
performing the drawing processing using the stored processed data obtained by preceding drawing processing when the drawing position information contained in the processing unit data used in current drawing processing coincides with the held drawing position information, and
storing, in an external storing circuit, the stored processed data obtained by the preceding drawing processing, and then acquiring desired processed data from said external storing circuit to perform the drawing processing using the acquired processed data when the drawing position information contained in the processing unit data used in the current drawing processing does not coincide with the held drawing position information,
when processed data obtained by previous drawing processing is necessary for performing the current drawing processing.

20. The image drawing method according to claim 13, wherein the same drawing processing unit corresponds to partial areas of the same column of said image drawing area.

21. The image drawing method according to claim 13, wherein different drawing processing units correspond to two partial areas adjacent to each other of said image drawing area.

22. The image drawing method according to claim 21, wherein said plurality of drawing processing units arranged in prescribed order correspond to partial areas of one of two columns adjacent to each other of said image drawing area, and said plurality of drawing processing units arranged in opposite order to said prescribed order correspond to partial areas of the other column.
